(19) **Europäisches Patentamt / European Patent Office / Office européen des brevets**

(11) **EP 1 474 603 B1**

(12) **EUROPÄISCHE PATENTSCHRIFT**

(45) Veröffentlichungstag und Bekanntmachung des Hinweises auf die Patenterteilung:
**20.02.2008 Patentblatt 2008/08**

(21) Anmeldenummer: **02787399.1**

(22) Anmeldetag: **26.11.2002**

(51) Int Cl.:
*F02M 51/06* (2006.01)  *F02M 61/08* (2006.01)

(86) Internationale Anmeldenummer:
**PCT/DE2002/004335**

(87) Internationale Veröffentlichungsnummer:
**WO 2003/067071 (14.08.2003 Gazette 2003/33)**

(54) **BRENNSTOFFEINSPRITZVENTIL**

FUEL-INJECTION VALVE

SOUPAPE D'INJECTION DE CARBURANT

(84) Benannte Vertragsstaaten:
**AT BE BG CH CY CZ DE DK EE ES FI FR GB GR IE IT LI LU MC NL PT SE SK TR**

(30) Priorität: **05.02.2002 DE 10204655**

(43) Veröffentlichungstag der Anmeldung:
**10.11.2004 Patentblatt 2004/46**

(73) Patentinhaber: **ROBERT BOSCH GMBH**
**70442 Stuttgart (DE)**

(72) Erfinder:
- **MAEURER, Walter**
  **70374 Stuttgart (DE)**
- **DOEBLER, Ulrich**
  **71686 Remseck (DE)**

- **STIER, Hubert**
  **71665 Vaihingen / Enz (DE)**
- **HOHL, Guenther**
  **70569 Stuttgart (DE)**
- **DEPONTE, Rene**
  **71093 Weil im Schoenbuch (DE)**

(74) Vertreter: **Körfer, Thomas**
**Mitscherlich & Partner**
**Patent- und Rechtsanwälte**
**Postfach 33 06 09**
**80066 München (DE)**

(56) Entgegenhaltungen:
**EP-A- 0 869 278**      **EP-A- 1 079 098**
**WO-A-00/57050**      **DE-A- 10 007 733**

**Beschreibung**

Stand der Technik

Die Erfindung geht aus von einem Brennstoffeinspritzventil nach dem Oberbegriff des Anspruchs 1.

Beispielsweise ist ein Brennstoffeinspritzventil nach dem Oberbegriff des Anspruchs 1 aus der DE 195 34 445 C2 bekannt. Das dort beschriebene Brennstoffeinspritzventil für Brennkraftmaschinen umfaßt eine in einem Düsenkörper axial bewegliche Düsennadel, welche durch ein piezoelektrisches Stellglied betätigbar ist und durch eine Druckfeder in Schließstellung gehalten wird. Die Brennstoffzufuhr erfolgt dabei von einer externen Quelle mit frei einstellbarem Druck. Die Düsennadel weist eine Zentralbohrung auf, wobei das Stellglied die Düsennadel konzentrisch umgibt und mittels einer Dichtfläche gegen den Brennstoffdruck abgedichtet ist.

Die EP 0 869 278 A1 offenbart ein Einspritzventil mit Mitteln zur Kompensation der thermischen Längenänderung.

Die DE 100 07 733 A1 offenbart ein Brennstoffeinspritzventil, bei welchem zwischen Aktor und Düsennadel ein metallisches Wellrohr angeordnet ist.

Die EP 1 079 098 A2 offenbart ein Dosierventil mit einem Metallbalg zur Abdichtung.

Nachteilig an dem aus der DE 195 34 445 C2 bekannten Einspritzventil ist insbesondere, daß der Hub des Piezoaktors durch den Einfluss des Brennstoffdrucks trotz der Dichtflächen um bis zu 30% des Nennhubs variieren kann. Weiterhin ist von Nachteil, daß bedingt durch die Länge der Ventilnadel Schwingungen in dieser induziert werden, welche zu einem unkontrollierbarem Prellverhalten führen können.

Vorteile der Erfindung

Das erfindungsgemäße Brennstoffeinspritzventil mit den Merkmalen des Anspruchs 1 hat dem gegenüber den Vorteil, daß die Abhängigkeit des Ventilhubs vom Brennstoffdruck durch druckausgleichende Maßnahmen erheblich reduziert wird. Druckschwingungen und Aktorschwingungen werden entkoppelt. Dies wird durch eine Hülse, in welcher der Aktor gekapselt ist, erreicht, indem die Steifigkeit der Hülse und des Betätigungsstempels so gewählt werden, daß eine Längenänderung der Hülse durch eine entsprechende Längenänderung des Aktors und des Betätigungsstempels, welcher abströmseitig des Aktors angeordnet ist, kompensiert ist.

Durch die in den abhängigen Ansprüchen aufgeführten Maßnahmen sind vorteilhafte Weiterentwicklungen des im Anspruch 1 angegebenen Brennstoffeinspritzventils möglich.

Insbesondere ist von Vorteil, daß der Aktor in einfacher Weise mittels einer Feder, welche zwischen einem mit dem Aktor in Wirkverbindung stehenden Betätigungsstempel und einer mit dem Gehäuse des Brennstoffeinspritzventils verbundenen Hülse eingespannt ist, vorgespannt werden kann.

Weiterhin ist von Vorteil, daß eine Vorspannung des Aktors auch mittels einer Federhülse möglich ist, welche über ein Stützbauteil und eine Schulter des Betätigungsstempels die beiden Stirnflächen des Aktors gegeneinander verspannt.

Durch die ortsfeste Anordnung der zweiten Hülse an dem Gehäuse des Brennstoffeinspritzventils werden Schwingungen durch den Brennstoffdruck effektiv gedämpft.

Die Steifigkeit der verschiedenen Materialien des Faltenbalgs und der Hülse des Aktors sind dabei so gewählt, daß die Längenänderungen kompensiert werden.

Vorteilhafterweise kann die erste Hülse auch zur Vermeidung von die Längenkompensation erschwerenden Querkräften in einem Rohr gekapselt und durch eine Dichtung abgedichtet werden, so daß nur noch eine Kraft auf die Stirnfläche, nicht aber auf die Seitenfläche der den Aktor kapselnden Hülse wirkt. Dadurch wird die Kompensation der Längenänderung vereinfacht.

Zeichnung

Ausführungsbeispiele der Erfindung sind in der Zeichnung vereinfacht dargestellt und in der nachfolgenden Beschreibung näher erläutert. Es zeigen:

Fig. 1   einen schematischen Schnitt durch ein erstes Ausführungsbeispiel eines erfindungsgemäß ausgestalteten Brennstoffeinspritzventils,

Fig. 2   einen schematischen Schnitt durch ein zweites Ausführungsbeispiel eines erfindungsgemäß ausgestalteten Brennstoffeinspritzventils, und

Fig. 3   einen schematischen Schnitt durch ein drittes Ausführungsbeispiel eines erfindungsgemäß ausgestalteten Brennstoffeinspritzventils.

Beschreibung der Ausführungsbeispiele

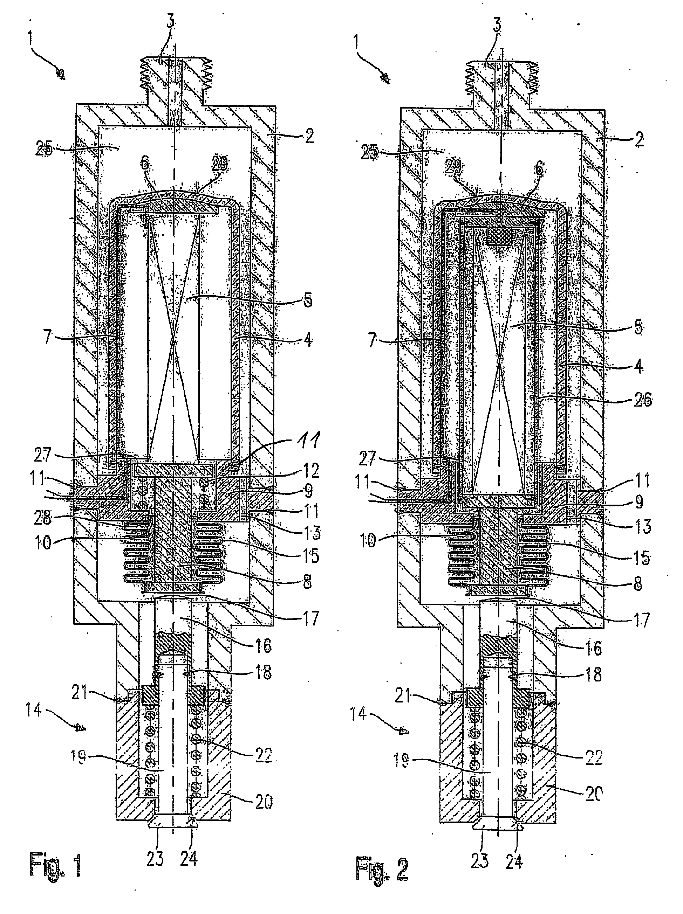

Ein in Fig. 1 dargestelltes erstes Ausführungsbeispiel eines erfindungsgemäßen Brennstoffeinspritzventils 1 ist in der Form eines Brennstoffeinspritzventils 1 für Brennstoffeinspritzanlagen von gemischverdichtenden, fremdgezündeten Brennkraftmaschinen ausgeführt. Das Brennstoffeinspritzventil 1 eignet sich insbesondere zum direkten Einspritzen von Brennstoff in einen nicht dargestellten Brennraum einer Brennkraftmaschine.

Das Brennstoffeinspritzventil 1 umfaßt ein Gehäuse 2, welches einen Hydraulikanschluß 3 für die Zufuhr des Brennstoffs umfaßt. In dem Gehäuse 2 ist eine erste Hülse 4 angeordnet, in welcher ein Aktor 5 gekapselt ist. Der Aktor 5 ist im ersten Ausführungsbeispiel als piezoelektrischer Aktor 5 ausgebildet. Der Aktor 5 stützt sich zulaufseitig über ein Stützbauteil 6 an der ersten Hülse 4 ab. Eine elektrische Leitung 7 zur Kontaktierung des Aktors 5 ist ebenfalls in der ersten Hülse 4 geführt.

Der Aktor 5 stützt sich abströmseitig an einem Betätigungsstempel 8 ab, welcher eine zweite Hülse 9 durch eine Öffnung 10 durchgreift. Die zweite Hülse 9 schließt die erste Hülse 4 gegen den Brennstoff ab und ist mit dem Gehäuse 2 formschlüssig über Schweißnähte 11 verbunden. Zwischen einer Schulter 28 der Hülse 9 und einer Schulter 27 des Betätigungsstempels 8 ist eine Feder 12 angeordnet, welche den Aktor 5 mit einer Vorspannung beaufschlagt.

In der zweiten Hülse 9 ist zumindest ein Brennstoffkanal 13 ausgebildet, welcher dem Brennstoff den Durchtritt zu einer Ventilgruppe 14 ermöglicht. Der Aktor 5 und der Betätigungsstempel 8 sind mittels eines Faltenbalgs 15, welcher elastisch ausgeführt ist, gegen den Brennstoff abgedichtet.

Abströmseitig des Betätigungsstempels 8 ist ein Flansch 16 ausgebildet, welcher im geschlossenen Zustand des Brennstoffeinspritzventils 1 durch einen Spalt 17 von dem Betätigungsstempel 8 beabstandet ist. Der Flansch 16 steht über eine Schweißnaht 18 kraftschlüssig mit einer Ventilnadel 19 in Wirkverbindung. Die Ventilnadel 19 ist in einem Düsenkörper 20 geführt. Der Düsenkörper 20 ist mit dem Gehäuse 2 über eine Schweißnaht 21 verbunden. Zwischen dem Flansch 16 und dem Düsenkörper 20 ist eine Schließfeder 22 angeordnet. Die Schließfeder 22 beaufschlagt den Flansch 16 und damit die Ventilnadel 19 mit einer Schließkraft, welche das Brennstoffeinspritzventil 1 in nicht erregtem Zustand des Aktors 5 geschlossen hält. Dadurch wird ein mit der Ventilnadel 19 verbundener Ventilschließkörper 23 an einer an dem Düsenkörper 20 ausgebildete Ventilsitzfläche 24 in dichtender Anlage gehalten.

Bei Erregung des Aktors 5 dehnt sich der Aktor 5 in einer Abströmrichtung des Brennstoffs gegen die Kraft der Feder 12 aus. Dadurch wird der Betätigungsstempel 8 ebenfalls in Abströmrichtung des Brennstoffs bewegt. Der Spalt 17 zwischen dem Betätigungsstempel 8 und der Ventilnadel 19 wird geschlossen. Bei einer weiteren Ausdehnung des Aktors 5 wird die Ventilnadel 19 entgegen der Kraft der Schließfeder 22 ebenfalls in Abströmrichtung des Brennstoffs bewegt. Dadurch hebt der Ventilschließkörper 23 von der Ventilsitzfläche 24 ab und Brennstoff wird in den nicht näher dargestellten Brennraum der Brennkraftmaschine eingespritzt.

Wird der den Aktor 5 erregende elektrische Strom, welcher über die elektrische Leitung 7 zugeführt wird, abgeschaltet, zieht sich der Aktor 5 zusammen. Bei Entlastung der Ventilnadel 19 durch den Betätigungsstempel 8 bewegt die Schließfeder 22 den Flansch 16 entgegen der Strömungsrichtung des Brennstoffs, so daß der mit der Ventilnadel 19 verbundene Ventilschließkörper 23 wieder auf der Ventilsitzfläche 24 aufsetzt und das Brennstoffeinspritzventil 1 dadurch geschlossen wird. Durch die Kraft der Feder 12 wird weiterhin der Betätigungsstempel 8 ebenfalls entgegen der Strömungsrichtung des Brennstoffs bewegt, wodurch der Betätigungsstempel 8 in seine Ausgangsstellung zurückkehrt. Zwischen dem Betätigungsstempel 8 und der Ventilnadel 19 ist wieder der Spalt 17 ausgebildet.

Bedingt durch den Brennstoffdruck in einem Innenraum 25 des Brennstoffeinspritzventils 1 wird die erste Hülse 4, in welcher der Aktor 5 gekapselt ist, gestaucht. Dadurch wird das Stützbauteil 6, welches zulaufseitig an dem Aktor. 5 anliegt, in Abströmrichtung des Brennstoffs gedrückt, wodurch der Aktor 5 ebenfalls gestaucht wird. Dies würde ohne Kompensationsmaßnahmen dazu führen, daß der zwischen dem Betätigungsstempel 8 und der Ventilnadel 19 ausgebildete Spalt 17 unzulässig vergrößert würde. Daher sind die Steifigkeit der ersten Hülse 4, und die Steifigkeit des Betätigungsstempels 8 so ausgelegt, daß eine Längenänderung der ersten Hülse 4 bedingt durch den Brennstoffdruck durch eine Längenänderung des Aktors 5 und des Betätigungsstempels 8 kompensiert ist, so daß gilt, daß sich die Gesamtheit aller Längenänderungen zu Null addiert und sich daher nicht auf den Hub der Ventilnadel 19 auswirken kann. Es gilt dabei, daß $\Sigma\Delta 1 = 0$, wobei die Längenänderung $\Delta 1$ proportional zur wirkenden Kraft ist, so daß $\Delta 1 = F / c$. Dabei bezeichnet c die Steifigkeit des beaufschlagten Materials gegenüber der Druckkraft. Damit ist betragsmäßig

$$F_{Hülse} / c_{Hülse} = F_{Aktor/Stempel} / c_{Aktor/Stempel}.$$

Unter der Voraussetzung, daß der Durchmesser des Brennstoffkanals 13 so bemessen ist, daß der Brennstoff ungedrosselt in Richtung Dichtsitz strömt, ist die Druckdifferenz zulaufseitig und abströmseitig der zweiten Hülse 9 ebenfalls Null, so daß mit F = p · A gilt:

$$A_{Hülse} \ / \ C_{Hülse} = A_{Aktor/Stempel} \ / \ C_{Aktor/Stempel}.$$

Da $C_{Hülse} \gg C_{Balg}$ ist, ergibt sich mit der weiteren Einschränkung der Gleichung auf die druckrelevanten Flächen somit insgesamt

$$A_{Hülse} - A_{Balg} \ / \ C_{Hülse} = A_{Balg} \ / \ C_{Aktor/Stempel}.$$

Die Flächen $A_{Hülse}$ und $A_{Balg}$ und die Steifigkeiten $C_{Hülse}$ und $c_{Aktor/Stempel}$ können nun in einfacher Weise durch eine entsprechende Form und Materialwahl so angepaßt werden, daß die den Aktor 5 kapselnde erste Hülse 4 in Verbindung mit dem Faltenbalg 15 druckkompensiert ist.

Die Ventilnadel 19 wird erst durch den Betätigungsstempel 8 betätigt, wenn dem Aktor 5 eine elektrische Spannung über die elektrische Leitung 7 zugeführt wird. Durch diese Maßnahme werden Druckschwingungen des Brennstoffs und Schwingungen des Aktors 5 entkoppelt, so daß keine unerwünschten Öffnungsimpulse auftreten. Auf andere aufwendige Druckkompensationstechniken, wie zum Beispiel einen hydraulischen Koppler, kann daher verzichtet werden. Der Spalt 17 ist dabei außerdem so dimensioniert, daß Längenänderungen thermischer Art des Aktors nicht zu Fehlfunktionen des Brennstoffeinspritzventils 1 führen können.

Fig. 2 zeigt in einer ausschnittsweisen Schnittdarstellung ein zweites Ausführungsbeispiel eines erfindungsgemäß ausgestalteten Brennstoffeinspritzventils 1. Übereinstimmende Bauteile sind dabei mit übereinstimmenden Bezugszeichen versehen. Auf eine wiederholende Beschreibung bereits beschriebener Bauteile kann verzichtet werden. Insbesondere kann die Ventilgruppe 14 identisch mit der in Fig. 1 beschriebenen Ventilgruppe 14 sein.

Das in Fig. 2 dargestellte zweite Ausführungsbeispiel ist eine besonders einfache Variante des erfindungsgemäßen Brennstoffeinspritzventils 1. Dabei weist der Aktor 5 in der Hülse 4 eine zusätzliche Federhülse 26 auf, die wie eine Zugfeder wirkt. Dadurch ist der Aktor 5 vorgespannt und ebenfalls bereits vor seiner Betätigung mit einer. Vorspannung beaufschlagt. Eine weitere Feder wie im ersten Ausführungsbeispiel kann entfallen. Im übrigen ist die Funktionsweise identisch mit dem in Fig. 1 beschriebenen Ausführungsbeispiel.

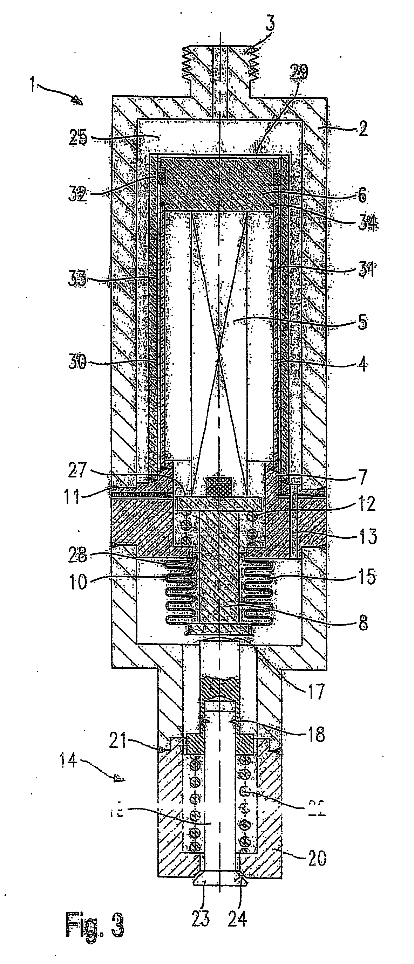

Fig. 3 zeigt in einer schematischen Schnittdarstellung ein drittes Ausführungsbeispiel eines erfindungsgemäß ausgestalteten Brennstoffeinspritzventils 1 dar. Übereinstimmende Bauteile sind dabei mit übereinstimmenden Bezugszeichen versehen. Auf eine wiederholende Beschreibung bereits beschriebener Bauteile kann verzichtet werden. Insbesondere kann die Ventilgruppe 14 identisch mit der in Fig. 1 beschriebenen Ventilgruppe 14 sein.

In den in Fig. 1 und 2 dargestellten Ausführüngsbeispielen kann durch die nicht ausschließlich auf die zulaufseitige Stirnfläche 29 der ersten Hülse 4 wirkende Kraft des das Brennstoffeinspritzventil 1 durchströmenden Brennstoffs eine Verlängerung der ersten Hülse 4 durch Querkräfte nicht vermieden werden, welche der Stauchung der ersten Hülse 4 entgegenwirkt und die Kompensation der Längenänderung erschwert.

Um dies zu umgehen, wird in dem in Fig. 3 dargestellten Ausführungsbeispiel vorgeschlagen, die erste Hülse 4 in einem Rohr 30 zu kapseln, wodurch zwar die Stirnfläche 29 der ersten Hülse 4 nach wie vor die auf sie wirkende Kraft aufnimmt, eine Seitenfläche 31 der ersten Hülse 4. jedoch abgeschirmt wird, indem eine Dichtung 32 zwischen dem Rohr 30 und dem Stützbauteil 6 eingelegt wird.. Die Dichtung 32 kann dabei beispielsweise in Form eines O-Rings ausgebildet sein.

Zwischen der ersten Hülse 4, welche im vorliegenden dritten Ausführungsbeispiel mit dem Stützbauteil 6 in einfacher Weise über eine Schweißnaht 34 verbunden ist, und dem Rohr 30 ist somit ein kräftefreier Raum 33 ausgebildet, welcher eine Verlängerung der ersten Hülse 4 verhindert, wodurch die Längenkompensation erleichtert wird.

Die Erfindung ist nicht auf die dargestellten Ausführungsbeispiele beschränkt und zum Beispiel auch für nach innen öffnende Brennstoffeinspritzventile 1 oder magnetostriktive Aktoren 5 anwendbar.

**Patentansprüche**

1.   Brennstoffeinspritzventil (1) zum direkten Einspritzen von Brennstoff in den Brennraum einer Brennkraftmaschine mit einen Aktor (5), der in einer ersten Hülse (4) gekapselt ist, einer durch den Aktor (5) betätigbaren Ventilnadel (19), welche einen Ventilschließkörper (23) umfaßt, der mit einer Ventilsitzfläche (24) zu einem Dichtsitz zusammenwirkt, und einer Schließfeder (22), durch welche die Ventilnadel (19) so beaufschlagt ist, daß der Ventilschließkörper (23) im unerregten Zustand des Aktors (5) in dichtender Anlage an der Ventilsitzfläche (24) gehalten wird, wobei der Aktor (5) die Ventilnadel (19) über einen Betätigungsstempel (8) nach Schließen eines Spalts (17) betätigt, wobei

der Aktor (5) in der ersten Hülse (4) gegen einen Innenraum (25) des Brennstoffeinspritzventils (1) abgedichtet ist **dadurch gekennzeichnet, daß** der Betätigungsstempel (8) durch einen mit einer zweiten Hülse (9) verbundenen Faltenbalg (15) gegen den Innenraum (25) des Brennstoffeinspritzventils (1) abgedichtet ist und die Steifigkeit der ersten Hülse (4) $C_{Hülse}$ und des Betätigungsstempels $C_{Aktor.Stempel}$ (8) und die Flächen der ersten Hülse $A_{Hülse}$ und des Faltenbalgs $A_{Balg}$ so dimensioniert sind, daß gilt:

$$A_{Hülse} - A_{Balg} / C_{Hülse} = A_{Balg} / C_{Aktor.Stempel},$$

so daß eine durch den an der zulaufseitigen Stirnfläche (29) der ersten Hülse (4) anliegenden Brennstoffdruck verursachte Längenänderung der ersten Hülse (4) durch eine Längenänderung des Aktors (5) und des Betätigungsstempels (8) so kompensiert ist, daß sich die axiale Breite des Spalts (17) bei einer Variation des Brennstoffdrucks nicht ändert.

2. Brennstoffeinspritzventil nach Anspruch 1,
   **dadurch gekennzeichnet,**
   **daß** sich der Aktor (5) zulaufseitig an einem Stützbauteil (6) abstützt, welches an der ersten Hülse (4) anliegt.

3. Brennstoffeinspritzventil nach Anspruch 1 oder 2,
   **dadurch gekennzeichnet,**
   **daß** der Aktor (5) mit einem Betätigungsstempel (8) in Wirkverbindung steht, der eine zweite Hülse (9) durch eine Öffnung (10) durchgreift.

4. Brennstoffeinspritzventil nach einem der Ansprüche 1 bis 3,
   **dadurch gekennzeichnet,**
   **daß** die zweite Hülse (9) mit der ersten Hülse (4) und einem Gehäuse (2) des Brennstoffeinspritzventils (1) über Schweißnähte (11) verbunden ist.

5. Brennstoffeinspritzventil nach einem der Ansprüche 1 bis 4,
   **dadurch gekennzeichnet,**
   **daß** eine Steifigkeit der ersten Hülse (4) sehr viel größer ist als eine Steifigkeit des Faltenbalgs (15).

6. Brennstoffeinspritzventil nach einem der Ansprüche 1 bis 5,
   **dadurch gekennzeichnet,**
   **daß** der Aktor (5) Mittels einer Feder (12) mit einer Vorspannung beaufschlagt ist.

7. Brennstoffeinspritzventil nach Anspruch 6,
   **dadurch gekennzeichnet,**
   **daß** die Feder (12) abströmseitig des Aktors (5) angeordnet ist.

8. Brennstoffeinspritzventil nach Anspruch 7,
   **dadurch gekennzeichnet,**
   **daß** die Feder (12) zwischen einer Schulter (27) des Betätigungsstempels (8) und einer Schulter (28) der zweiten Hülse (9) eingespannt ist.

9. Brennstoffeinspritzventil nach einem der Ansprüche 1 bis 5,
   **dadurch gekennzeichnet,**
   **daß** der Aktor (5) mittels einer Federhülse (26) mit einer Vorspannung beaufschlagt ist.

10. Brennstoffeinspritzventil nach Anspruch 9,
    **dadurch gekennzeichnet,**
    **daß** die Federhülse (26) einerseits mit einer Schulter (27) des Betätigungsstempels (8) und andererseits mit einem Stützbauteil (6), welches an der ersten Hülse (4) anliegt und an dem sich der Aktor (5) abstützt, kraftschlüssig verbunden ist.

**11.** Brennstoffeinspritzventil nach Anspruch 1,
**dadurch gekennzeichnet,**
**daß** die erste Hülse (4) so in einem Rohr (30) gekapselt ist, daß die durch den Brennstoff ausgeübte Kraft nur auf die zulaufseitige Stirnfläche (29) wirkt.

**12.** Brennstoffeinspritzventil nach Anspruch 11,
**dadurch gekennzeichnet,**
**daß** die erste Hülse (4) mittels einer Dichtung (32) gegenüber dem Innenraum (25) des Brennstoffeinspritzventils (1) abgedichtet ist.

**13.** Brennstoffeinspritzventil nach Anspruch 12,
**dadurch gekennzeichnet,**
**daß** die Dichtung (32) in Form eines O-Rings ausgebildet ist.

**14.** Brennstoffeinspritzventil nach einem der Ansprache 11 bis 13,
**dadurch gekennzeichnet,**
**daß** zwischen dem Rohr (30) und der ersten Hülse (4) ein kraftfreier Raum (33) ausgebildet ist.

**Claims**

**1.** Fuel injection valve (1) for the direct injection of fuel into the combustion chamber of an internal combustion engine, having an actuator (5) which is encapsulated in a first sleeve (4), a valve needle (19) which can be actuated by the actuator (5) and comprises a valve closing body (23) which interacts with a valve seat face (24) to form a sealing seat, and a closing spring (22), by which the valve needle (19) is loaded in such a way that the valve closing body (23) is held in sealing contact against the valve seat face (24) in the non-excited state of the actuator (5), the actuator (5) actuating the valve needle (19) via an actuating ram (8) after closure of a gap (17), the actuator (5) being sealed in the first sleeve (4) with respect to an inner space (25) of the fuel injection valve (1), **characterized in that** the actuating ram (8) is sealed with respect to the inner space (25) of the fuel injection valve (1) by a folding bellows (15) which is connected to a second sleeve (9), and the rigidity of the first sleeve (4) $C_{sleeve}$ and of the actuating ram (8) $C_{actuator, ram}$ and the surface areas of the first sleeve $A_{sleeve}$ and the folding bellows $A_{bellows}$ are dimensioned in such a way that:

$$A_{sleeve} - A_{bellows} / C_{sleeve} = A_{bellows} / C_{actuator, ram},$$

with the result that a length change of the first sleeve (4) which is caused by the fuel pressure which prevails on the inlet-side end face (29) of the first sleeve (4) is compensated for by a length change of the actuator (5) and the actuating ram (8) in such a way that the axial width of the gap (17) does not change if the fuel pressure varies.

**2.** Fuel injection valve according to Claim 1, **characterized in that** the actuator (5) is supported on the inlet side on a supporting component (6) which bears against the first sleeve (4).

**3.** Fuel injection valve according to Claim 1 or 2, **characterized in that** the actuator (5) is operatively connected to an actuating ram (8) which reaches through a second sleeve (9) through an opening (10).

**4.** Fuel injection valve according to one of Claims 1 to 3, **characterized in that** the second sleeve (9) is connected to the first sleeve (4) and a housing (2) of the fuel injection valve (1) via welded seams (11).

**5.** Fuel injection valve according to one of Claims 1 to 4, **characterized in that** a rigidity of the first sleeve (4) is very much greater than a rigidity of the folding bellows (15).

**6.** Fuel injection valve according to one of Claims 1 to 5, **characterized in that** the actuator (5) is loaded with a prestress by means of a spring (12).

7. Fuel injection valve according to Claim 6, **characterized in that** the spring (12) is arranged on the outflow side of the actuator (5).

8. Fuel injection valve according to Claim 7, **characterized in that** the spring (12) is clamped between a shoulder (27) of the actuating ram (8) and a shoulder (28) of the second sleeve (9).

9. Fuel injection valve according to one of Claims 1 to 5, **characterized in that** the actuator (5) is loaded with a prestress by means of a spring sleeve (26).

10. Fuel injection valve according to Claim 9, **characterized in that** the spring sleeve (26) is non-positively connected on one side to a shoulder (27) of the actuating ram (8) and on the other side to a supporting component (6) which bears against the first sleeve (4) and on which the actuator (5) is supported.

11. Fuel injection valve according to Claim 1, **characterized in that** the first sleeve (4) is encapsulated in a pipe (30) in such a way that the force which is exerted by the fuel acts only on the inlet-side end face (29).

12. Fuel injection valve according to Claim 11, **characterized in that** the first sleeve (4) is sealed with respect to the inner space (25) of the fuel injection valve (1) by means of a seal (32).

13. Fuel injection valve according to Claim 12, **characterized in that** the seal (32) is configured in the form of an O-ring.

14. Fuel injection valve according to one of Claims 11 to 13, **characterized in that** a force-free space (33) is formed between the pipe (30) and the first sleeve (4).

## Revendications

1. Injecteur de carburant (1) pour injecter directement du carburant dans la chambre de combustion d'un moteur à combustion interne, comprenant un actionneur (5) encapsulé dans un premier manchon (4), ayant une aiguille d'injecteur (19) commandée par l'actionneur (5), l'aiguille ayant un organe d'obturation de soupape (23) coopérant avec une surface formant siège de soupape (24) pour former un siège d'étanchéité ainsi qu'un ressort de fermeture (22) sollicitant l'aiguille d'injecteur (19) pour que lorsque l'actionneur (5) n'est pas excité, l'organe d'obturation de soupape (23) soit en appui étanche contre la surface formant siège de soupape (24),
l'actionneur (5) commandant l'aiguille d'injecteur (19) par un poinçon d'actionnement (19) après fermeture d'un intervalle (17),
l'actionneur (5) étant séparé de manière étanche dans le premier manchon (4) vis-à-vis du volume intérieur (25) de l'injecteur de carburant (1),
**caractérisé en ce que**
le poinçon d'actionnement (8) est séparé de manière étanche vis-à-vis du volume intérieur (25) de l'injecteur de carburant (1) par un soufflet (15) relié à un second manchon (9) et
la rigidité du premier manchon (4) $C_{manchon}$ et celle du poinçon d'actionnement $C_{actionneur,poinçon}$, (8), et la surface du premier manchon $A_{manchon}$ et celle du soufflet $A_{soufflet}$ sont dimensionnées selon la relation suivante :

$$A_{manchon} - A_{soufflet} \ / \ C_{manchon} = A_{soufflet} \ / \ C_{actionneur,poinçon},$$

de façon que la variation de longueur du premier manchon (4) occasionnée par la pression du carburant appliqué contre la face frontale (29) côté alimentation du premier manchon (4) soit compensée par une variation de longueur de l'actionneur (5) et du poinçon d'actionnement (8) pour que la largeur axiale de l'intervalle (17) ne change pas lorsque la pression du carburant change.

2. Injecteur de carburant selon la revendication 1,
**caractérisé en ce que**
du côté entrée, l'actionneur (5) s'appuie contre un composant de support (6) appliqué contre le premier manchon (4).

3. Injecteur de carburant selon l'une des revendications 1 ou 2,
**caractérisé en ce que**

l'actionneur (5) coopère avec un poinçon d'actionnement (8) qui traverse un orifice (10) du second manchon (9).

4. Injecteur de carburant selon l'une des revendications 1 à 3,
   **caractérisé en ce que**
   le second manchon (9) est relié au premier manchon (4) et au boîtier (2) de l'injecteur (1) par des cordons de soudure (11).

5. Injecteur de carburant selon l'une des revendications 1 à 4,
   **caractérisé en ce que**
   la rigidité du premier manchon (4) est beaucoup plus grande que celle du soufflet (15).

6. Injecteur de carburant selon l'une des revendications 1 à 5,
   **caractérisé en ce que**
   l'actionneur (5) est sollicité par un ressort (12) avec une précontrainte.

7. Injecteur de carburant selon la revendication 6,
   **caractérisé en ce que**
   le ressort (12) est installé côté aval de l'actionneur (5).

8. Injecteur de carburant selon la revendication 7,
   **caractérisé en ce que**
   le ressort (12) est serré entre un épaulement (27) du poinçon d'actionnement (8) et un épaulement (28) du second manchon (9).

9. Injecteur de carburant selon l'une des revendications 1 à 5,
   **caractérisé en ce que**
   l'actionneur (5) est sollicité avec une précontrainte par un manchon à ressort (26).

10. Injecteur de carburant selon la revendication 9,
    **caractérisé en ce qu'**
    une extrémité du manchon à ressort (26) s'applique contre un épaulement (27) du poinçon d'actionnement (8) et par son autre extrémité il s'appuie contre le composant de support (6) s'appliquant contre le premier manchon (4) et contre lequel s'appuie l'actionneur (5) en étant relié par une liaison par la force.

11. Injecteur de carburant selon la revendication 1,
    **caractérisé en ce que**
    le premier manchon (4) est encapsulé dans le tube (30) pour que la force exercée par le carburant agisse seulement sur la face frontale (29) côté alimentation.

12. Injecteur de carburant selon la revendication 11,
    **caractérisé en ce que**
    le premier manchon (4) est séparé de manière étanche par un joint (32) vis-à-vis du volume intérieur (25) de l'injecteur de carburant (1).

13. Injecteur de carburant selon la revendication 12,
    **caractérisé en ce que**
    le joint (32) est un joint torique.

14. Injecteur de carburant selon l'une des revendications 11 à 13,
    **caractérisé par**
    un volume sans force (33) est formé entre le tube (30) et le premier manchon (4).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19534445 C2
- EP 0869278 A1
- DE 10007733 A1
- EP 1079098 A2